# EUROPEAN PATENT SPECIFICATION

(11) **EP 4 542 759 B1**
(45) Date of publication and mention of the grant of the patent: **19.08.2026**
(21) Application number: 22946937.4
(22) Date of filing: 21.12.2022
(51) Int. Cl.: H01M 50/566, B23K 26/21, H01M 50/209, H01M 50/505, H01M 50/528, H01M 50/569, B23K 26/22, B23K 26/244, B23K 20/10, B23K 26/323, B23K 101/36, B23K 101/38, B23K 103/10, B23K 103/12, B23K 103/18

(54) **METAL WELDED STRUCTURE, BATTERY PACK USING SAME, AND BATTERY PACK PRODUCTION METHOD**
GESCHWEISSTE METALLSTRUKTUR, BATTERIEPACK DAMIT UND BATTERIEPACKHERSTELLUNGSVERFAHREN
STRUCTURE SOUDÉE EN MÉTAL, BLOC-BATTERIE L'UTILISANT, ET PROCÉDÉ DE PRODUCTION DE BLOC-BATTERIE

(30) Priority: 16.06.2022 JP 2022097252
(43) Date of publication of application: 23.04.2025
(73) Proprietor: Vehicle Energy Japan Inc., Hitachinaka-shi, Ibaraki 312-8505 (JP)
(72) Inventor: URAKI Keiichi, Hitachinaka-shi, Ibaraki 312-8505 (JP); YAMASHITA Kohei, Hitachinaka-shi, Ibaraki 312-8505 (JP); YAMANE Teruki, Hitachinaka-shi, Ibaraki 312-8505 (JP); KUBOTA Osamu, Hitachinaka-shi, Ibaraki 312-8505 (JP)
(74) Representative: Strehl & Partner mbB
(86) International application number: PCT/JP2022/047252
(87) International publication number: WO 2023/243122

(56) References cited:
- WO-A1-2020/194964
- JP-A- 2001 062 575
- JP-A- 2009 233 712
- JP-A- 2016 173 972
- JP-A- S57 170 419
- JP-A- S57 170 419
- US-A1- 2018 294 465
- US-A1- 2021 205 926
- D. ABHISHEK ET AL: "Modelling the impact of laser micro-joint shape and size on resistance and temperature for Electric Vehicle battery joining application", JOURNAL OF ENERGY STORAGE, ELSEVIER BV, NL, vol. 52, 23 May 2022 (2022-05-23), XP087101490, ISSN: 2352-152X, [retrieved on 20220523], DOI: 10.1016/J.EST.2022.104868

## Description

The present invention relates to a welded structure of a storage battery, and specifically, to a structure of a storage battery having a welded part of a wiring terminal and a method of producing the same, according to the preamble of claims 1, 4 and 5 respectively, see for example US 2018/294465 A1.

### [Background Art]

For example, a vehicle battery module has a mechanism for detecting voltage information and temperature information of an on-board battery, and the wiring for the mechanism often has a connection structure via a metal plate (bus bar) that connects to a battery main body or between batteries, and a wiring terminal.

Here, since wirings and terminals are generally connected by mechanical bonding such as crimping, the material of the terminal is often a terminal material with a relatively high hardness property, for example, a phosphor bronze material, among copper-based materials having excellent electrical conductivity. The terminal made of this phosphor bronze member is connected to a counterpart member, and the connection methods used include mechanical bonding such as crimping and press-fitting, solid phase bonding such as resistance welding and ultrasonic bonding, and welding methods in which members are locally melted such as laser welding, arc welding, and electron beam welding.

Here, regarding the last welding method, in the related art, single spot welding in which only one spot is formed or single bead welding in which only a simple line or curve is formed is the mainstream.

PTL 1 describes a configuration of a molded member having a ridge line part in which a reinforcing material is attached to a ridge line part by welding, and thus impact resistance is improved. PTL 2 describes a method of laser bonding a first metal plate such as a steel plate and an aluminum plate having a lower melting point than the first metal plate. PTL 3 describes a laser bonding method in which the peel strength can be increased by bonding flange parts of two components having flange parts.

### [Citation List]

### [Patent Literature]

[PTL 1] Japanese Patent Application Publication No. 2014-87848
[PTL 2] Japanese Patent No. 5457605
[PTL 3] Japanese Patent No. 6176428

### [Summary of Invention]

### [Technical Problem]

In vehicle battery modules, welded parts are required to have strength reliability in order to withstand external environment conditions such as vibration and to secure conductivity, and due to the trend toward smaller product specifications, the shapes of members to be welded are becoming smaller, and thus a welded structure in which a necessary bonding area is secured in a narrow part of a small terminal is becoming increasingly necessary. Therefore, a bead shape with a bent part, a plurality of lines or line shapes, an annular shape such as a circular arc or an ellipse, or a weld shape with a plurality of spots is formed in the narrow part, and a shape having a small distance between bead facing parts, adjacent beads, or adjacent spots is required.

On the other hand, a terminal material with a relatively high hardness property such as phosphor bronze has a high-temperature embrittlement behavior in which ductility decreases at a high temperature. The inventors found that, when a member terminal having such a physical property behavior is welded to form a bead shape for securing a welding area in the narrow part as described above, in welding of beads on the facing part or adjacent part, the weld metal part and its surroundings are exposed to a high temperature due to thermal impact during weld processing of the second half bead formed later, a displacement behavior in which the material contracts in a cooling procedure from solidification is fixedly inhibited by the previously formed first half bead welded part, the tensile stress is concentrated in the embrittled high temperature area, and weld cracks are likely to occur in the second half bead part.

Therefore, in order to form a welded structure of a vehicle battery module having excellent conductivity and strength reliability, it is necessary to form a weld shape that provides a welding area with a sufficient size in a micro narrow part and that prevents the occurrence of weld cracks due to physical properties of the terminal material with a relatively high hardness property.

### [Solution to Problem]

In order to address the above problems in the current technology, the present invention provides a welding method according to claim 1, in which, in a lap joint structure which includes twc members, at least one of which is made of phosphor bronze, and in which the upper member and the lower member are laminated, energy is applied from one side to melt and penetrate the upper member, which is welded to the lower member, and when viewed from above, the weld bead has a shape with bead parts that are two or more lines or curves, a weld bead shape in which the adjacent bead width W and the distance D between the bead centers have a relationship of D/W≥2 is formed, and thus the concentration of tensile stress that causes cracks by inhibiting stress relaxation in a high temperature range during the second half of processing of adjacent or facing beads, which is a cause of the occurrence of weld cracks in a phosphor bronze member, is avoided.

The present invention provides a welding method according to claim 5, using in particular a laser beam or an arc, or electron beam as energy for forming the above series of weld beads.

The present invention provides a battery pack according to claim 4, e.g. a small vehicle battery pack having excellent reliability when it has a welded part formed by the above series of welding methods.

### [Advantageous Effects of Invention]

When the weld shape of the present invention is used, in a terminal joint made of a terminal material with a relatively high hardness property, it is possible to form a welded structure having excellent strength reliability without causing weld cracks while securing the weld length.

### [Brief Description of Drawings]

[Fig. 1A]

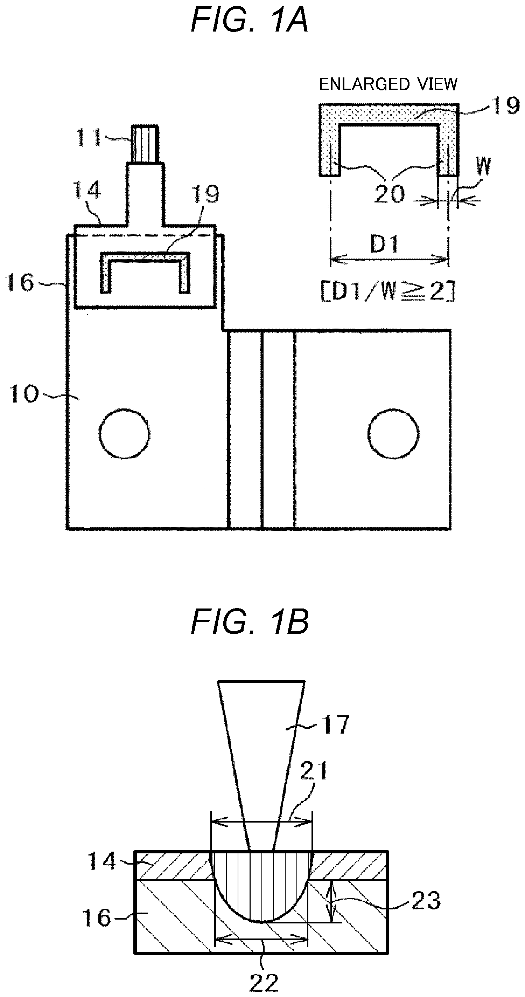

   Fig. 1A is a schematic view showing the shape of lap welding between a voltage detection terminal and a bus bar.
[Fig. 1B]
   Fig. 1B is a cross-sectional view showing laser welding of Example 1.
[Fig. 1C]

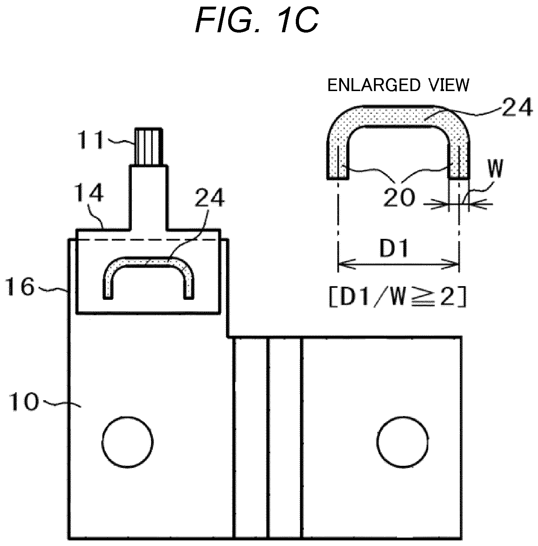

   Fig. 1C is a schematic view showing another form.
[Fig. 1D]

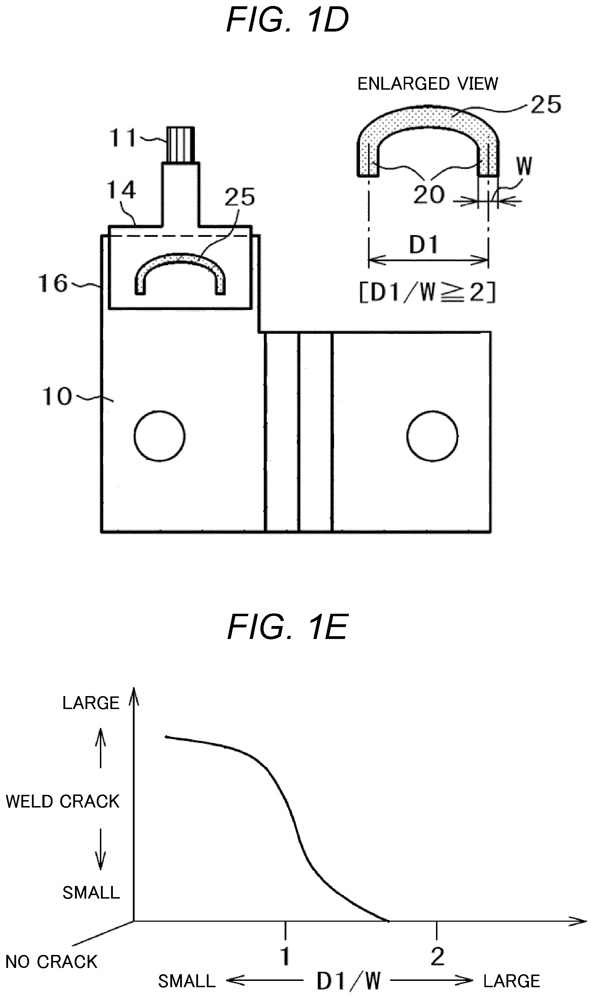

   Fig. 1D is a schematic view showing still another form.
[Fig. 1E]
   Fig. 1E is a graph showing the relationship between the shape of a weld bead and weld cracks.
[Fig. 1F]

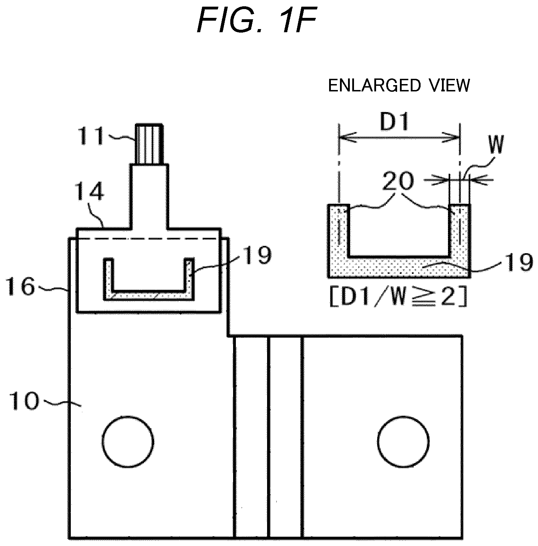

   Fig. 1F is a schematic view showing still another form.
[Fig. 1G]

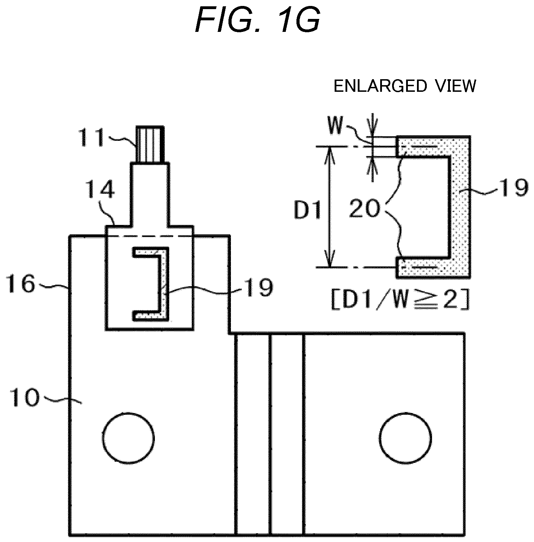

   Fig. 1G is a schematic view showing still another form.
[Fig. 1H]

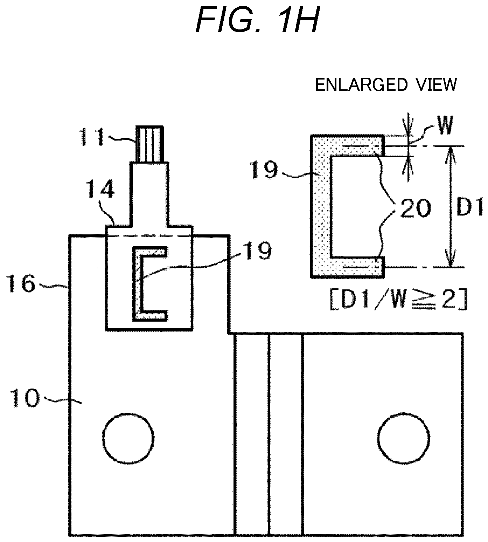

   Fig. 1H is a schematic view showing still another form.
[Fig. 2A]

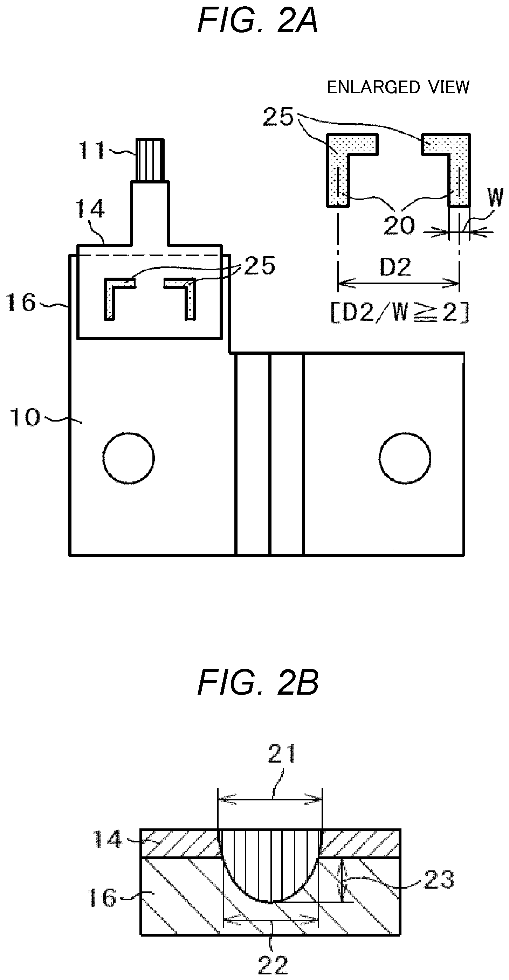

   Fig. 2A is a schematic view showing the shape of lap welding between a voltage detection terminal and a bus bar according to the present invention.
[Fig. 2B]
   Fig. 2B is a cross-sectional view showing laser welding according to the present invention.
[Fig. 3A]

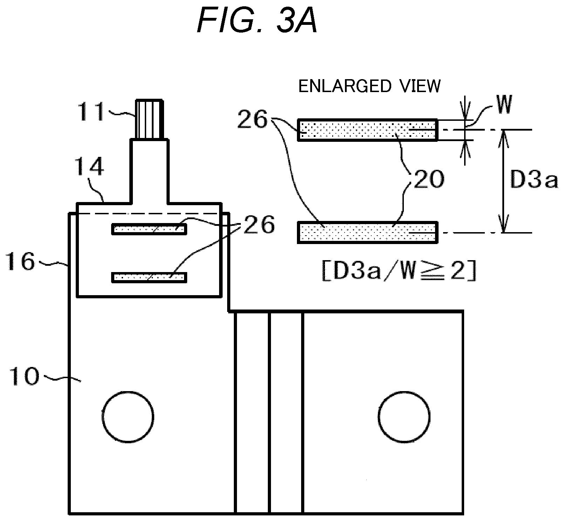

   Fig. 3A is a schematic view showing the shape of lap welding between a voltage detection terminal and a bus bar.
[Fig. 3B]

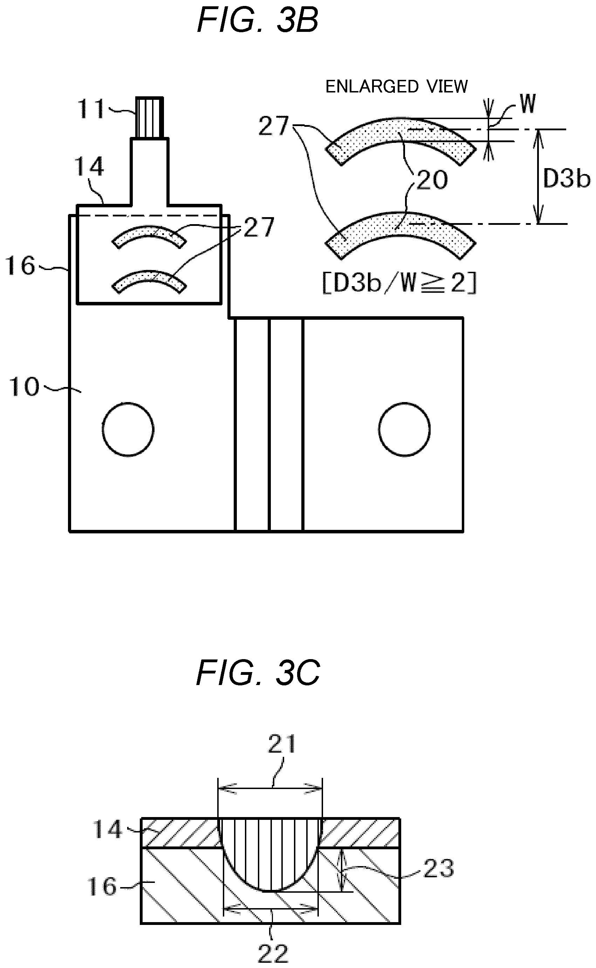

   Fig. 3B is a schematic view showing the shape of lap welding between a voltage detection terminal and a bus bar according to another form.
[Fig. 3C]
   Fig. 3C is a cross-sectional view showing laser welding.
[Fig. 4A]

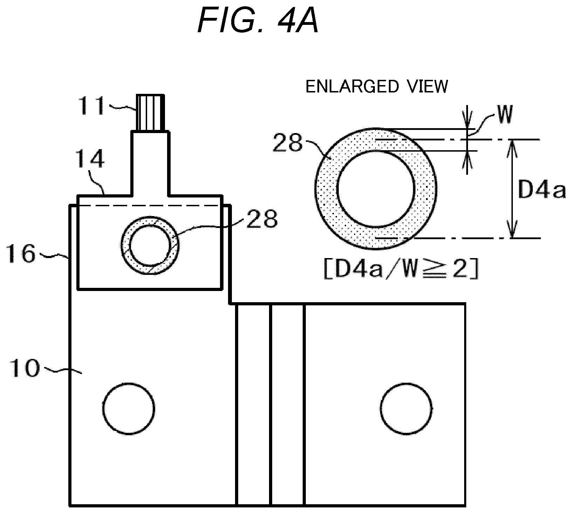

   Fig. 4A is a schematic view showing the shape of lap welding between a voltage detection terminal and a bus bar.
[Fig. 4B]

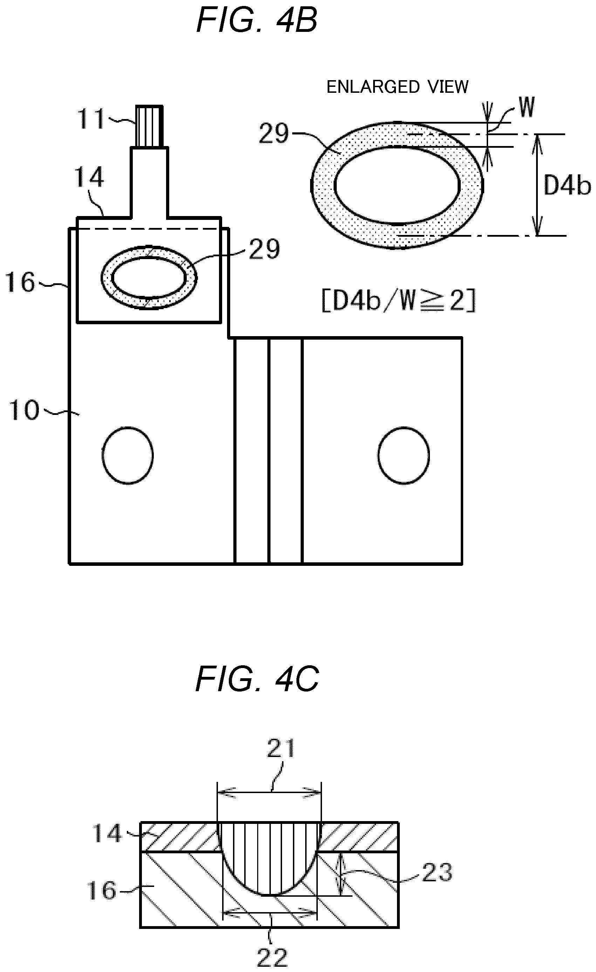

   Fig. 4B is a schematic view showing the shape of lap welding between a voltage detection terminal and a bus bar according to another form.
[Fig. 4C]
   Fig. 4C is a cross-sectional view showing laser welding.
[Fig. 5A]

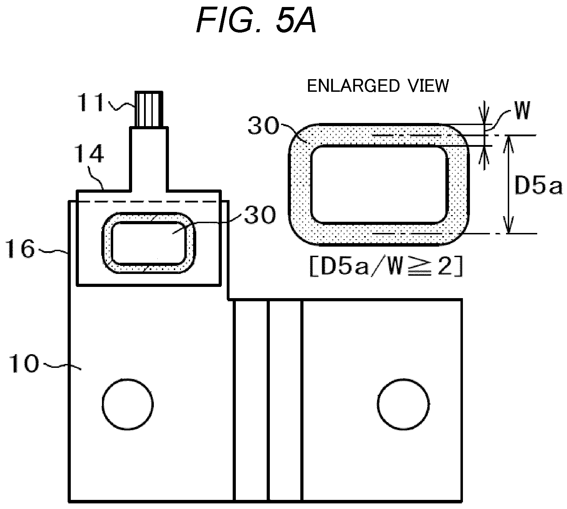

   Fig. 5A is a schematic view showing the shape of lap welding between a voltage detection terminal and a bus bar.
[Fig. 5B]

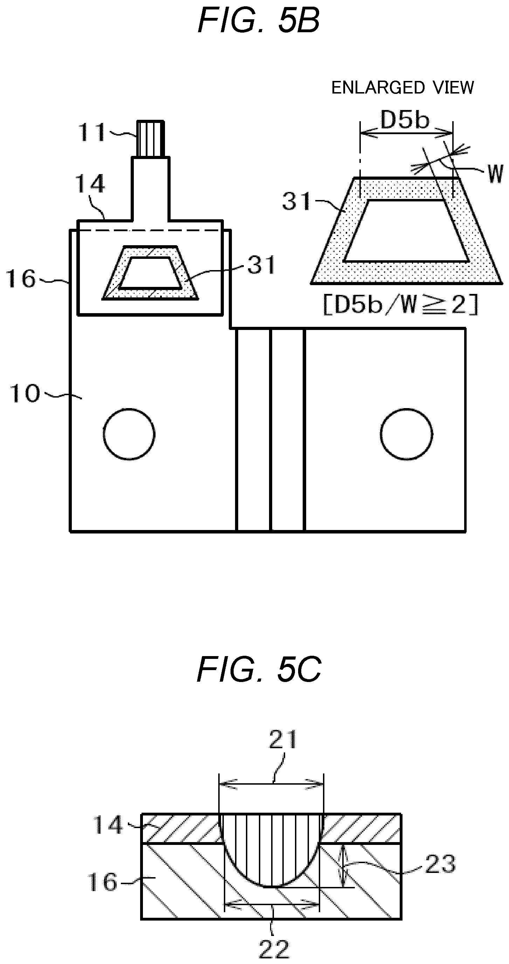

   Fig. 5B is a schematic view showing the shape of lap welding between a voltage detection terminal and a bus bar according to another form.
[Fig. 5C]
   Fig. 5C is a cross-sectional view showing laser welding.
[Fig. 6A]

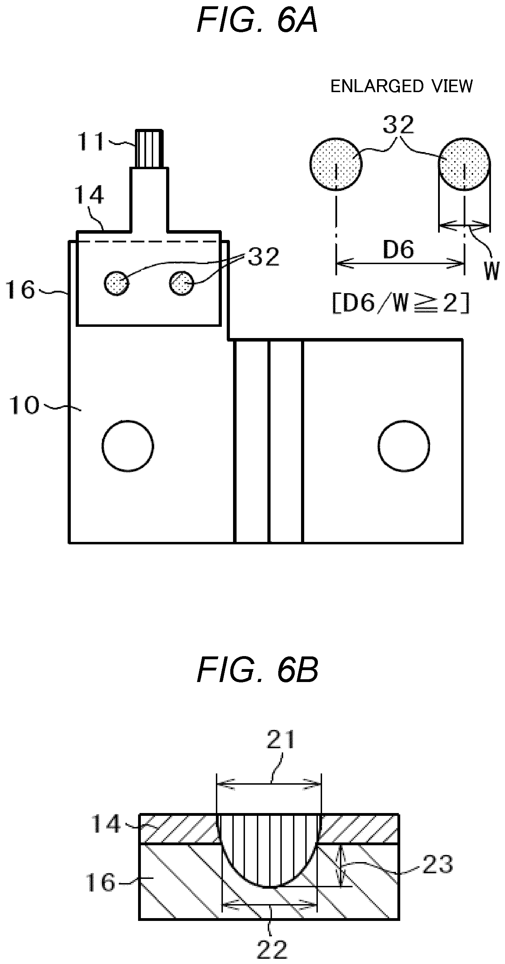

   Fig. 6A is a schematic view showing the shape of lap welding between a voltage detection terminal and a bus bar.
[Fig. 6B]
   Fig. 6B is a cross-sectional view showing laser welding.
[Fig. 7A]

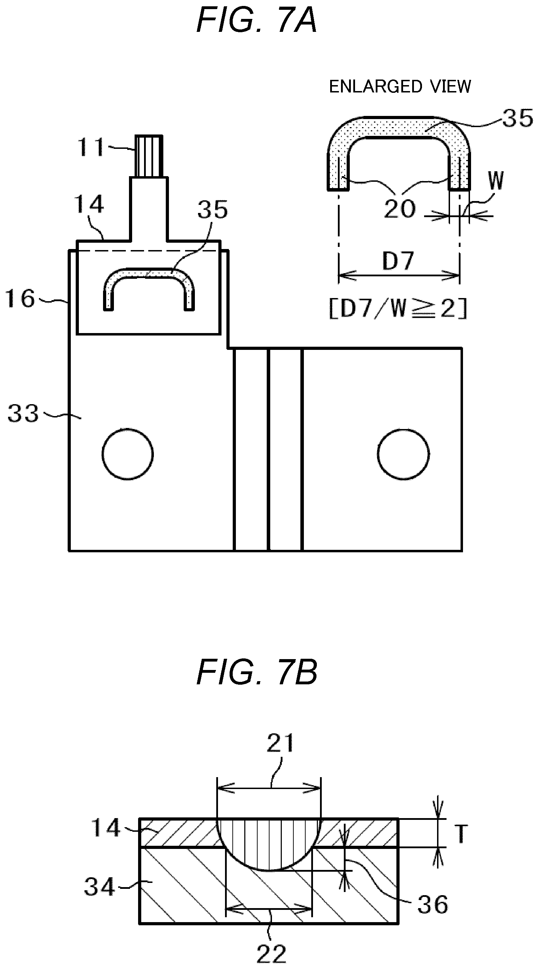

   Fig. 7A is a schematic view showing the shape of lap welding between a voltage detection terminal and a bus bar.
[Fig. 7B]
   Fig. 7B is a cross-sectional view showing laser welding.
[Fig. 8A]

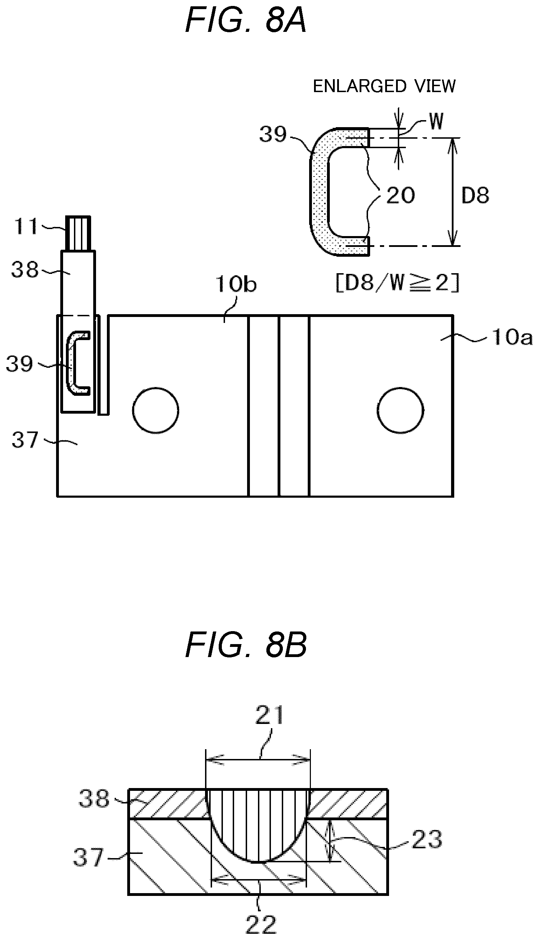

   Fig. 8A is a schematic view showing the shape of lap welding between a voltage detection terminal and a bus bar.
[Fig. 8B]
   Fig. 8B is a cross-sectional view showing laser welding.
[Fig. 9A]

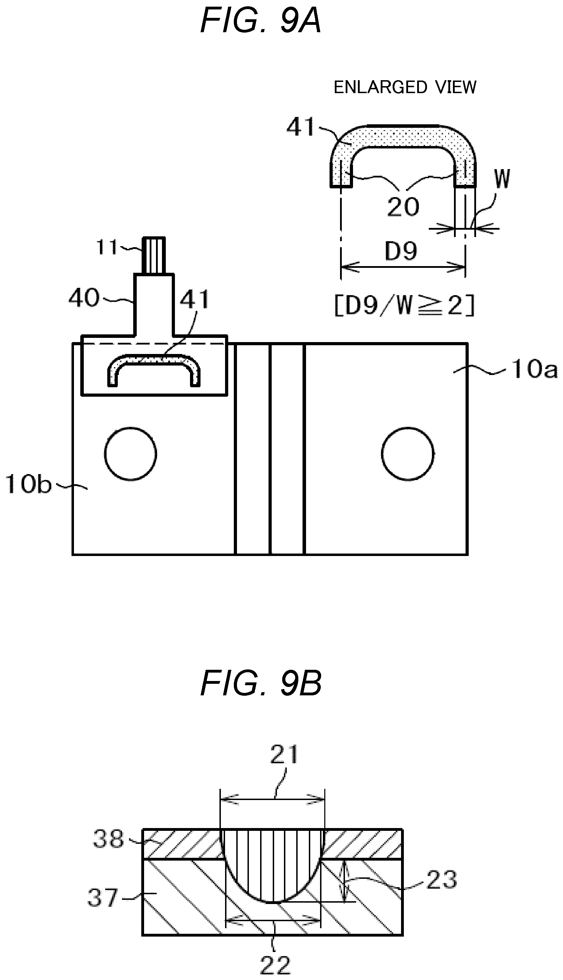

   Fig. 9A is a schematic view showing the shape of lap welding between a voltage detection terminal and a bus bar.
[Fig. 9B]
   Fig. 9B is a cross-sectional view showing laser welding.
[Fig. 10A]

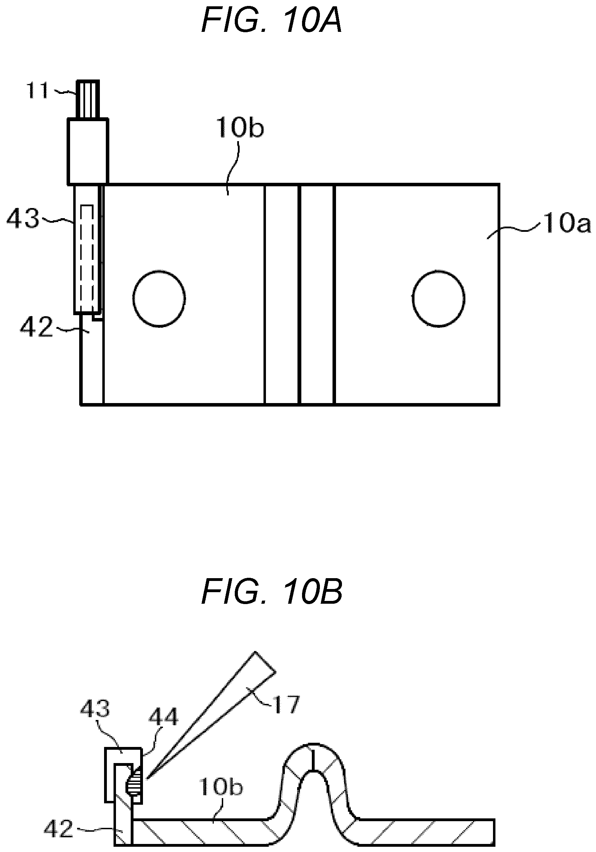

   Fig. 10A is a schematic view showing the shape of lap welding between a voltage detection terminal and a bus bar.
[Fig. 10B]
   Fig. 10B is a cross-sectional view of the bus bar in Fig. 10A in a long-side direction.
[Fig. 10C]

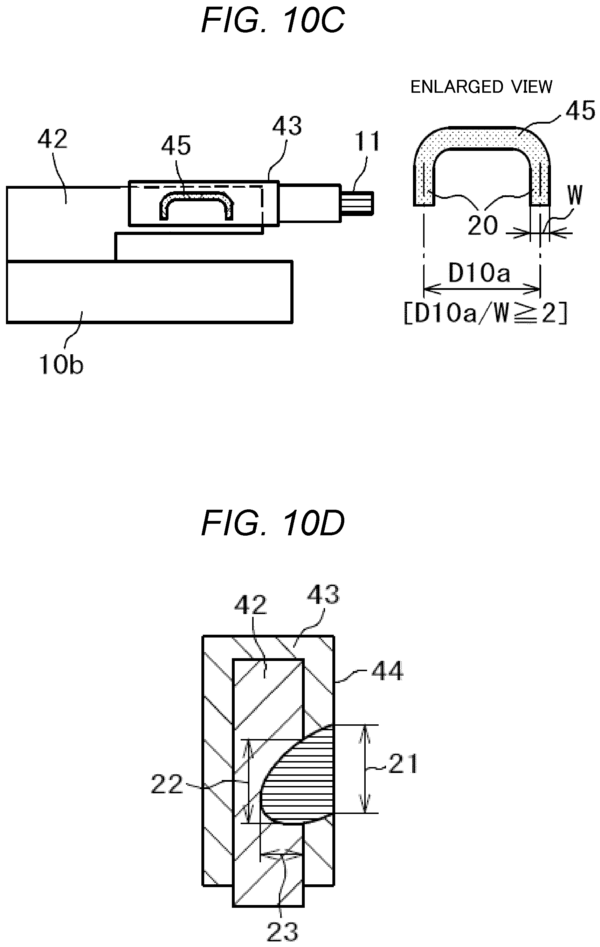

   Fig. 10C is a side view of the bus bar in Fig. 10A in a short-side direction.
[Fig. 10D]
   Fig. 10D is a schematic view showing the shape of lap welding between a voltage detection terminal and a bus bar according to another form.
[Fig. 10E]

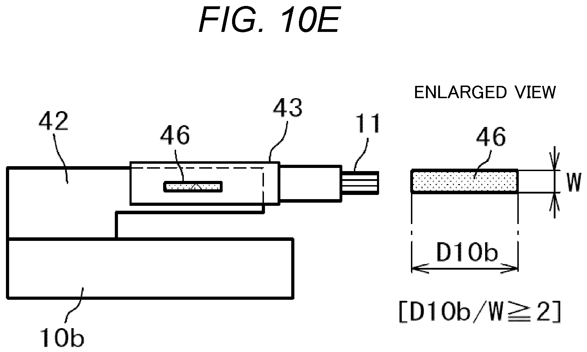

   Fig. 10E is a side view of the bus bar in Fig. 10D in a short-side direction.
[Fig. 11A]

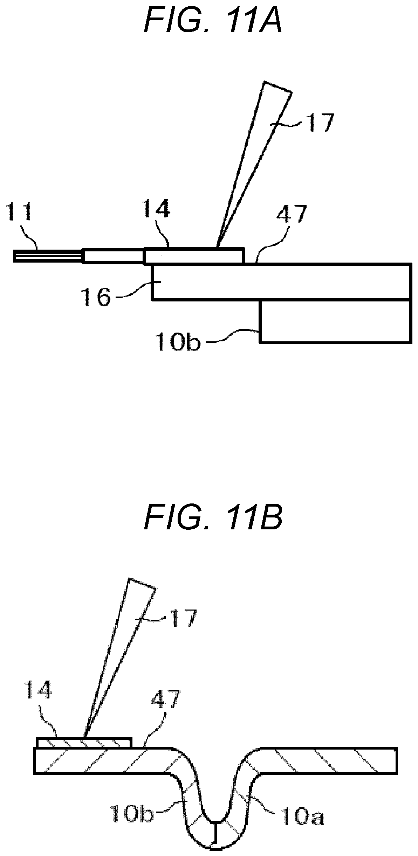

   Fig. 11A is a cross-sectional view of the bus bar in an upside-down state when viewed in a short-side direction when the bus bar and the voltage detection terminal are laser-connected.
[Fig. 11B]
   Fig. 11B is a cross-sectional view of the bus bar in an upside-down state when viewed in a long-side direction when the bus bar and the voltage detection terminal are laser-connected.
[Fig. 11C]

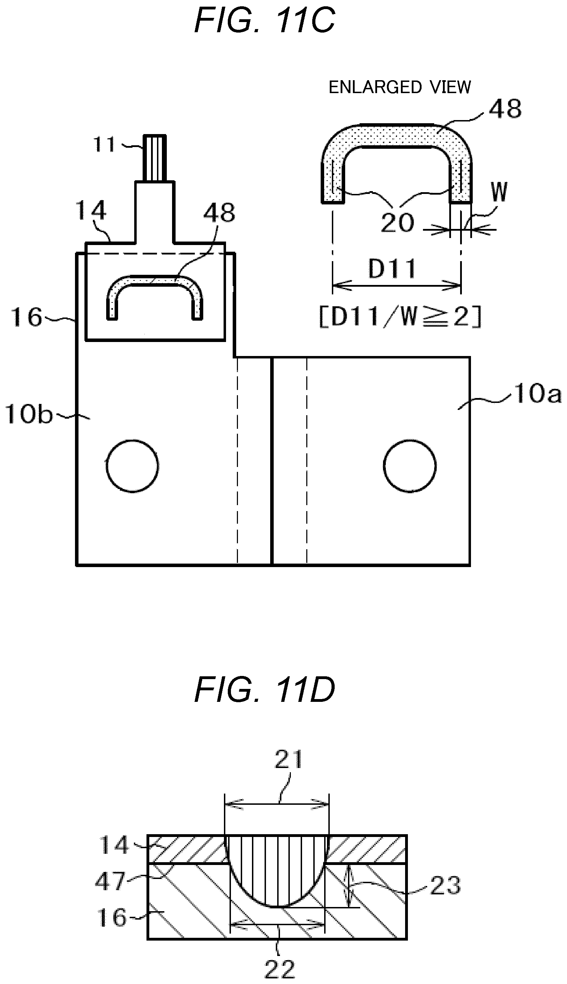

   Fig. 11C is a schematic view showing the shape of lap welding between a voltage detection terminal and a bus bar.
[Fig. 11D]
   Fig. 11D is a cross-sectional view showing laser welding.
[Fig. 11E]

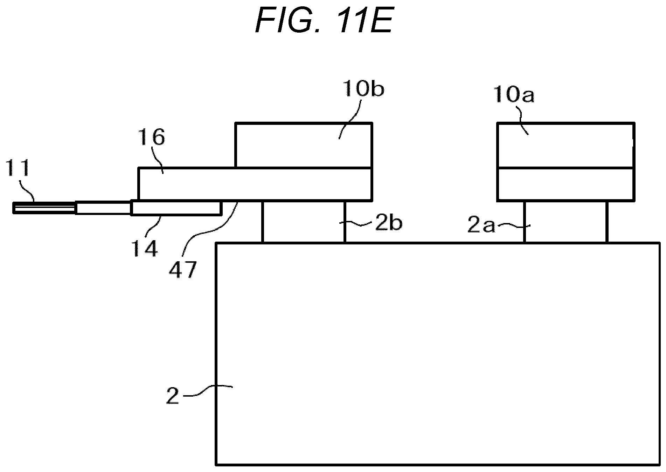

   Fig. 11E is a side view showing the relationship between a cell, the bus bar, and the voltage detection terminal in Example 11 when viewed in a long-side direction of the cell.
[Fig. 12A]

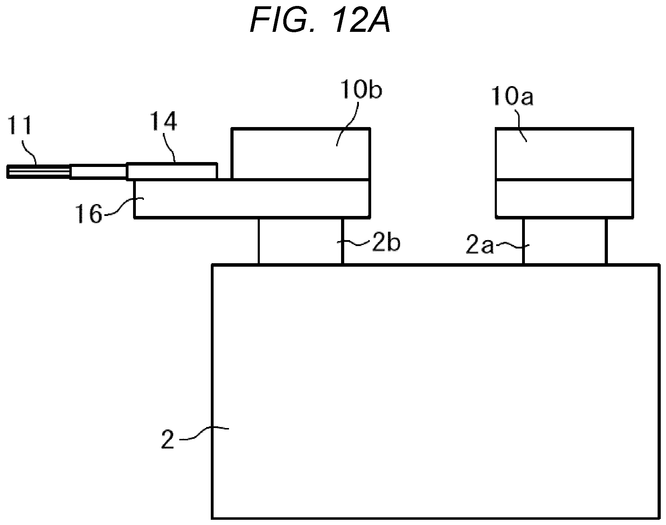

   Fig. 12A is a side view showing the relationship between the cells, bus bars, and voltage detection terminals in Examples 1 to 10 when viewed in a long-side direction of the cell.
[Fig. 12B]

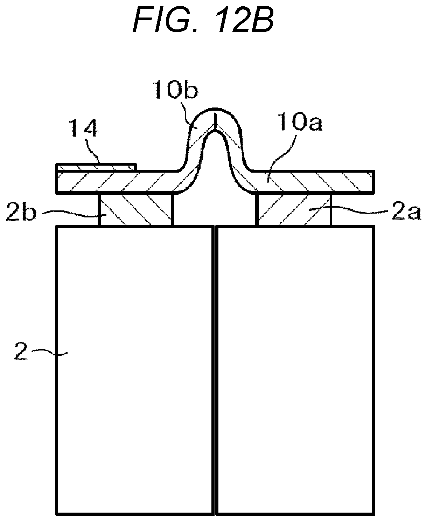

   Fig. 12B is a side view showing the relationship between the cells, bus bars, and voltage detection terminals when viewed in a short-side direction of the cell.
[Fig. 12C]

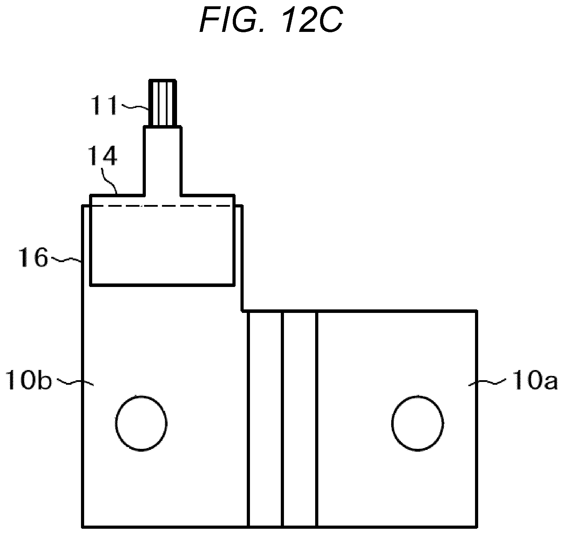

   Fig. 12C is a schematic view showing the disposition in a basic structure including a cell, a bus bar, and a voltage detection terminal and weld processing in a vehicle battery pack according to the present invention.
[Fig. 12D]

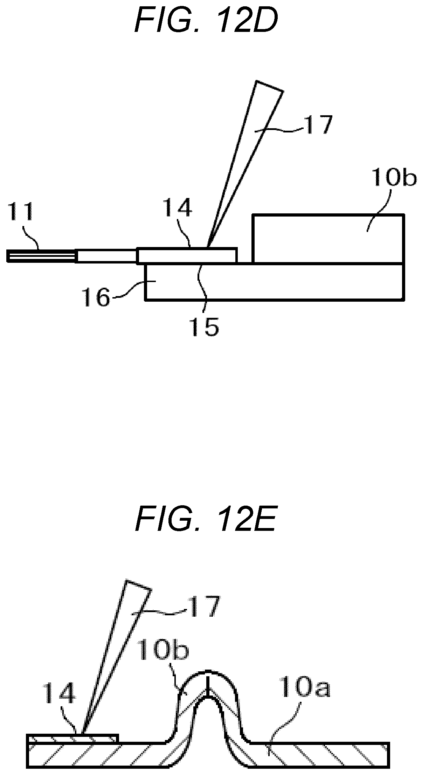

   Fig. 12D is a side view showing the relationship between the cells, bus bars, and voltage detection terminals when viewed in a short-side direction of the cell.
[Fig. 12E]
   Fig. 12E is a side view showing the relationship between the cells, bus bars, and voltage detection terminals when viewed in a long-side direction of the cell.
[Fig. 13]

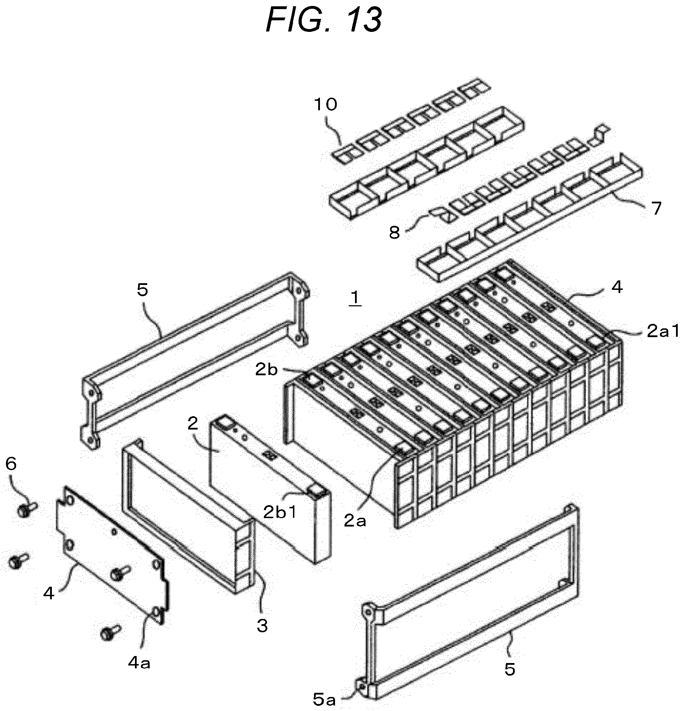

   Fig. 13 is a schematic view showing a vehicle battery pack according to the present invention.
[Fig. 14]

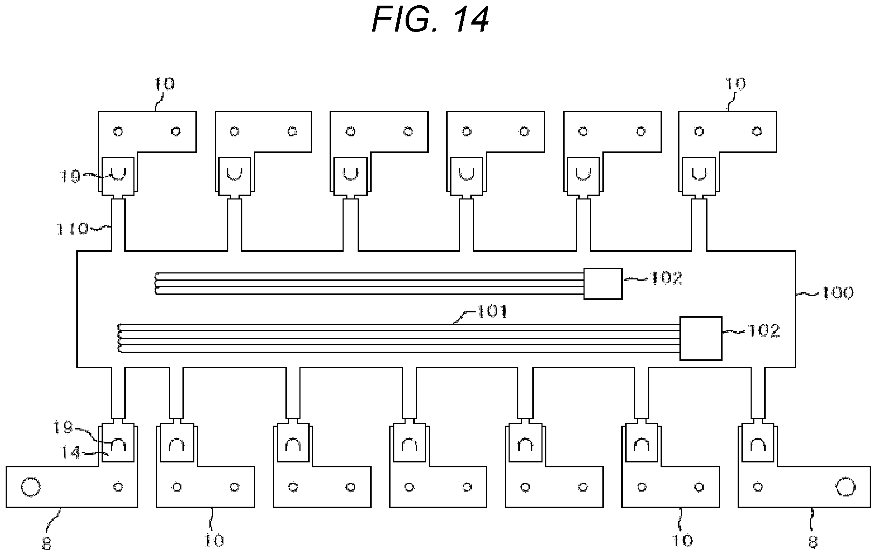

   Fig. 14 is a plan view showing the relationship between a harness assembly accommodating a voltage detection line, a voltage detection terminal, and a bus bar in a vehicle battery pack according to the present invention.

### [Description of Embodiments]

Hereinafter, the content of the present invention will be described in detail with reference to examples.

The basic configuration of a battery pack including a battery pack bus bar and a voltage detection terminal of the invention will be described with reference to the drawings.

### [Structure of battery pack]

Fig. 13 shows a battery pack 1 using a terminal welded structure according to the present invention. The battery pack 1 has a structure in which a plurality of cells 2 are fixed by a pair of end plates 4 and a pair of side plates 5. The cells 2 are, for example, rectangular secondary batteries such as lithium-ion secondary batteries.

The rectangular cells 2 have rectangular parallelepiped shapes having upper surfaces and lower surfaces, and having pairs of flat surfaces with large areas and pairs of side surfaces with small areas. The cells 2 are arranged in a row so that their flat surfaces with large areas face each other, and holders 3 are interposed between the cells 2, in front of the first cell 2 in the row, and behind the last cell 2 in the row.

The cells 2 each have a positive electrode 2a and a negative electrode 2b on the upper side and all have the same size, shape, and structure. The adjacent cells 2 are arranged with the positive electrode 2a and the negative electrode 2b that face each other, in other words, with front and rear flat surfaces that are alternately reversed. The positive electrode 2a is, for example, made of an aluminum-based metal such as aluminum or an aluminum alloy, and the negative electrode 2b is, for example, made of a copper-based metal such as copper or a copper alloy.

The end plate 4 is disposed in front of the first holder 3 in the row and behind the last holder 3 in the row. The pair of end plates 4 are made of a metal material and have a substantially rectangular shape, and openings 4a through which bolts 6 are inserted are provided at their four corners. The pair of side plates 5 are disposed on the sides of the cells 2 arranged in a row. Each side plate 5 is a rectangular frame having span parts that are spaced apart above and below and connecting parts that connect these span parts. At each corner of the frame, an opening 5a is formed to correspond to the opening 4a of the end plate 4.

The battery pack 1 is formed by arranging the first end plate 4 in the row and the last end plate 4 in the row inside the front and rear connecting parts of each side plate 5, inserting the bolt 6 into the opening 5a of the side plate 5 and the opening 4a of the end plate 4 and performing fixing by fastening. The bolts 6 are screwed into screw holes (not shown) formed in the holder 3 or nuts (not shown) are arranged on the rear side of the end plate 4 for fastening. Fixing with rivets may be used instead of fastening with the bolts 6.

An insulating cover 7 is disposed on the upper side of each cell 2 to surround the positive and negative electrodes 2a and 2b of the cells 2 arranged in a row. The positive electrode 2a and the negative electrode 2b of the adjacent cells 2 are connected by a bus bar 10. All the cells 2 are connected in series by the bus bars 10. A bus bar 8 is connected to a positive electrode 2a1 of the first cell 2 in the row and a negative electrode 2b1 of the last cell 2 in the row. The bus bar 10 or the bus bar 8, and the positive and negative electrodes 2a and 2b are bonded by welding such as laser welding and ultrasonic welding. A structure formed by connection with screw fastening instead of welding may be used.

Fig. 14 is a plan view showing a harness assembly 100 having a voltage detection wiring group 101, a voltage detection terminal 14 connected to the voltage detection wiring group 101, and the bus bars 8 and 10 connected to the voltage detection terminal 14. The voltage detection wiring group 101 is connected to the outside via a socket 102. In addition, a voltage measurement wiring is disposed within a branch harness 110, and connected to the voltage detection terminal 14. The bus bar 8 is an end bus bar, and is connected only to the outermost cell, whereas the bus bar 10 connects the terminals of two cells 2. Here, the bus bars 8 and 10 shown in Fig. 14 have the simplest configuration and do not have a structure as shown in the following example. Fig. 14 shows a configuration of twelve cells 2, corresponding to Fig. 13. Here, in Fig. 14, components other than those described above are not shown in order to avoid complicating the drawing.

Hereinafter, the voltage detection terminal 14 as an example of a first metal member, and the bus bars 8 and 10 (or welding target part 16 thereof) as an example of a second metal terminal will be described. The first metal member may be a bus bar connecting a battery and an external terminal rather than a bus bar connecting battery terminals. It can be applied to locations where the usage environment is harsh such as where the temperature rises. The second metal member may be a terminal other than the voltage detection terminal. As an example, it can be applied to a temperature detection terminal and the like. The "metal welded structure" of the present invention refers to a product including the first metal member and second metal member.

In Fig. 14, the welding target part of the bus bar 10 and the voltage detection terminal 14 overlap, and in this part, the bus bar 10 and the voltage detection terminal 14 are laser-welded. In Fig. 14, since each bus bar 10 is directly connected to the positive electrode 2a and the negative electrode 2b of the cell 2, the terminal voltage of the battery pack 1 is directly transmitted to the voltage detection terminal 14. A weld bead 19, which indicates the laser-welded part, is shown in a U-shape. The welding reliability of the weld bead 19 formed by laser welding is very important to the reliability of the entire battery pack. The content of the present invention will be described in detail with reference to the following examples.

Hereinafter, welded structures and examples according to the present invention will be described.

### (Basic structure of voltage detection terminal and bus bar)

First, a basic structure of a voltage detection terminal and a bus bar in a battery pack which is an object of the present invention will be described with reference to Fig. 12. Fig. 12A is a schematic view showing the cell 2, a bus bar negative electrode side 10b, and the voltage detection terminal 14, as a battery pack, when viewed from the side surface of the cell 2 in a long-side direction. The cell 2 includes the positive electrode 2a and the negative electrode 2b, and the bus bar 10 is connected to the upper parts of respective terminals to allow a current to flow between the terminals of the adjacent cells 2. A voltage detection line 11 is connected to the voltage detection terminal 14, and the voltage detection terminal 14 is disposed on the surface of the welding target part 16 with respect to a terminal provided so that it protrudes toward the negative electrode of the bus bar 10, and is welded in the structure of the present invention. Incidentally, the direction of the voltage detection line 11 in Fig. 12A is outward with respect to the cell 2, unlike Fig. 13 and Fig. 14. Fig. 12A is simply for illustrating the lamination relationship between the bus bar 10 and the voltage detection terminal 14 at the laser-bonded part, and does not have the same direction as an actual product as shown in Fig. 13 and Fig. 14.

Fig. 12B is a schematic view showing the cell 2, bus bar positive electrode sides 10a and bus bar negative electrode side 10b, and the voltage detection terminal 14 when viewed from the side surface of the adjacent cells 2 as the battery pack 1 in a short-side direction. The bus bar positive electrode side 10a and the bus bar negative electrode side 10b are disposed so that they connect the negative electrode 2b and the positive electrode 2a of each adjacent cell 2 and are connected to each terminal. The voltage detection terminal 14 is disposed on the surface of the welding target part 16 with respect to a terminal provided to protrude on the bus bar negative electrode side 10b and is welded in the structure of the present invention. In the example of the present invention, the surface on the upper side of the bus bar negative electrode side 10b when mounted in the battery pack 1 is called the front side, and the surface on the lower side thereof is called the rear side.

Next, a basic structure when the voltage detection terminal 14 which is an object of the present invention and the bus bar negative electrode side 10b are welded will be described. Fig. 12C shows the disposition of members before the voltage detection terminal 14 and the bus bar negative electrode side 10b are welded. The voltage detection terminal 14 is disposed in an upper part of the welding target part 16 with respect to the voltage detection terminal 14 which is provided to protrude from the bus bar negative electrode side 10b. In addition, Fig. 12D and Fig. 12E are diagrams during welding when viewed from the side surface, Fig. 12D is a diagram of the bus bar when viewed from the short side surface, and Fig. 12E is a diagram of the bus bar when viewed from the long side surface.

The surface of the voltage detection terminal 14 disposed as described above is irradiated with a laser beam, and is welded to the welding target part 16 of the bus bar negative electrode side 10b as a lap joint.

Here, in the present invention, in a method of applying energy for welding, not only a laser beam but also an arc or electron beam can be used. Hereinafter, in this example, a laser welding method will be described.

### (Materials of voltage detection terminal and bus bar)

The material of the voltage detection terminal 14 is phosphor bronze. A corresponding surface 15 of the welding target part 16 protruding from the bus bar 10 is Ni-plated or Sn-plated, or may be un-plated. On the other hand, in this example, regarding the material of the bus bar 10, the material of the welding target part 16 with respect to the voltage detection terminal 14 protruding from the bus bar negative electrode side 10b connected to the negative electrode 2b or 2b1 of the cell 2 is a pure copper material such as oxygen-free copper, phosphorus-deoxidized copper, or tough pitch copper or a phosphor bronze copper material. In addition, the bus bar positive electrode side 10a connected to the positive electrode 2a or 2a1 of the cell 2 is made of an aluminum-based material. A copper material part and an aluminum material part are bonded, adhered, or fastened to form a conductive structure.

### (Example of laser used)

The laser applied to execute the present invention has a blue visible light to near infrared range with a wavelength of 400 to 1,100 nm. In addition, the spot diameter of the laser beam emitted is 0.04 to 0.6 mm.

### (Welded structure)

Hereinafter, example not covered by the present invention, a characterized welded structure will be described with reference to Fig. 1. Fig. 1A shows a case in which the weld bead shape of the surface is a U-shape in the welded structure formed according to the present invention from above, which is the side of the voltage detection terminal 14. The bus bar negative electrode side 10b is formed so that the welding target part 16 with respect to the voltage detection terminal 14 protrudes toward the voltage detection line 11, and the voltage detection terminal 14 is welded to the welding target part 16 in an overlapping manner in the structure. In addition, as shown in Fig. 1B, in this example, the voltage detection terminal 14 is disposed as an upper member, and the welding target part 16 of the bus bar is disposed as a lower member with the surface 15 facing upward. This is a lap joint structure in which a continuous-beam laser beam 17 having the above characteristics is emitted to the surface of the voltage detection terminal 14 and melts and penetrates the voltage detection terminal 14, a molten part 18 reaches a predetermined depth from the surface 15 of the welding target part 16 of the bus bar, and thus the two members are welded.

In Fig. 1A, as an example, a case in which a facing part 20 is a second linear part in the weld bead 19 is exemplified. In addition, a case in which a first linear part is a part positioned between the facing parts 20 on both sides is exemplified. On both sides of the weld bead 19 in the longitudinal direction in which linear beads are formed, beads of the facing parts 20 are positioned.

As shown in Fig. 1A, regarding the shape of the weld bead, in a shape of a weld bead 19 having a U-shape with bent parts and having facing bead parts, a bead shape of a welded part surface in which the bead width W of the facing part 20 and the distance D1 between the bead centers have a relationship of D1/W≥2 is formed. When there is a variation in the bead width W of the facing part 20, the average value may be used. The same applies to other examples.

In addition, the distance between the bead centers is used as the width D1 of two end points of the welded part, but it is also conceivable to use the distance between sides of the second linear part in the longitudinal direction of the first linear part. When there is a little variation in the bead width W, measurement becomes easy. Here, the laser is emitted in the thickness direction of the member.

In this case, the welding speed (beam scanning speed) during continuous beam processing is within a range of 50 to 300 mm/s. In addition, during welding, in order to control the processing atmosphere and secure the bead shape, a processing method in which any of an inert gas or nitrogen as an assist gas and air or oxygen as a surface activation gas is blown toward a processing part is desirable, but processing without blowing the above gases is also possible.

In addition, in the above laser device and welding conditions, in order to obtain a sufficient conducting area and strength reliability, as shown in Fig. 1B, a welded structure in which a surface width 21 of the weld bead 19 is 0.4 mm or more, and a weld width 22 at the interface shown in Fig. 1B has a size of 0.1 mm or more is provided. When the bus bar negative electrode side 10b is made of the above copper-based material, the melting depth 23 on the side of the bus bar may be in a range of a penetration shape that is 0.1 mm or more and 80% or less of the bus bar plate thickness.

Here, the weld bead shape in this example being a U-shape has been described, but this shape refers not only to the weld bead 19 having a linear bent shape as shown in Fig. 1A, but also to a bent shape 24 of a combination of a line and an R curve as shown in Fig. 1C, or a shape 25 of a combination of a curve and a facing linear part as shown in Fig. 1D, all of which have the same meaning for the welded structure.

Fig. 1E shows the results of experimental verification of the ratio between the bead width W of the facing part and the distance D1 between the bead centers under the above welding conditions and bead shape, and the probability of occurrence of cracks in the welded part. In Fig. 1E, in adjacent weld beads between which the distance is small with respect to the width of the bead, the relaxation of the tensile stress that occurs during cooling may be inhibited by the first bead that has already been completely welded when the adjacent second bead is formed during welding. If the tensile stress is concentrated and imparted without being relaxed when the second bead is in an embrittled state at a high temperature, cracks are likely to occur. On the other hand, in a weld bead in which the distance is secured such that the relationship of D1/W is 2 or more, the tensile stress during formation of the second bead is sufficiently relaxed in an area that is distant from the weld bead 19, and stress concentration in an embrittled state at a high temperature can be avoided, and thus the occurrence of cracks can be prevented.

When such a shape of the weld bead is used, it is possible to avoid the concentration of tensile stress that causes cracks by inhibiting stress relaxation in a high temperature range during the second half of processing of adjacent or facing beads, which is a cause of the occurrence of weld cracks in a phosphor bronze member, and to form a welded structure having no cracks and excellent strength reliability.

In addition, in Fig. 1A, a shape in which the weld bead is directed so that the facing part 20 faces the direction in which the terminal of the cell 2 is positioned is shown, but in the present invention, depending on the conditions during processing such as jig disposition and the direction in which the laser beam 17 is emitted, it is also possible to use a shape in which the facing part 20 is inverted as shown in Fig. 1F, and a shape in which the facing part 20 faces the left side or right side of the cell 2 in the adjacent direction as shown in Fig. 1G and Fig. 1H. This is also the same for the bead shapes shown in Fig. 1C and Fig. 1D.

### Example 2

According to the present invention, a welded structure in which the weld beads have two L-shapes arranged in mirror symmetry will be described with reference to Fig. 2. As shown in Fig. 2A, as the shape of the weld bead, the weld beads have two L-shapes arranged in mirror symmetry. In the shape 25 having bead parts that face each other, a bead shape of a welded part surface in which the bead width W of the facing part 20 and the distance D2 between the bead centers have a relationship of D2/W≥2 is formed.

In this example, as the form of the weld beads, the mirror-symmetrical form is described, but it is not limited to perfect mirror symmetry, and the weld beads may be approximately mirror-symmetrical such as mirror-symmetrical as a whole. For example, a case in which the shape of the center of the bead width is composed of two L-shapes is conceivable. In this case, a case in which L vertical and horizontal lines or the area in which vertical and horizontal lines intersect have a curvature is also conceivable.

As shown in Fig. 2B, a welded structure in which the surface width 21 of the weld bead is 0.4 mm or more, and the weld width 22 at the interface shown in Fig. 2B has a size of 0.1 mm or more is provided. The laser specifications, the welding conditions, the processing atmosphere, the depth of the welded part, and the direction of the bead are the same as those in the method described in Example 1.

In two L-shaped beads in this example, the tensile stress during welding is more effectively relaxed, and it is possible to avoid the concentration of tensile stress that causes cracks by inhibiting stress relaxation in a high temperature range during the second half of processing of adjacent or facing beads, which is a cause of the occurrence of weld cracks in a phosphor bronze member, and to form a welded structure having no cracks and excellent strength reliability.

### Example 3, not covered by the present invention

A welded structure in which the shape of the weld beads are lines or curves disposed in parallel will be shown with reference to Fig. 3. As shown in Fig. 3A, regarding the shape of the weld bead, in a shape 26 in which the weld beads are lines disposed in parallel, a bead shape of a welded part surface in which the bead width W of the facing part 20 and the distance D3a between the bead centers have a relationship of D3a/W≥2 is formed.

As the form of the weld beads, the parallel form is described, but the weld beads may be arranged approximately in parallel with a gap therebetween as a whole. For example, it is conceivable for the line shape from one end to the other end when viewed from the center of the bead width to be disposed with a gap between it and another bead. In this case, it is preferable that the gap between one end and the other end be approximately constant. In addition, this line shape may be a line or a circular arc shape.

Alternatively, as shown in Fig. 3B, regarding the shape of the weld bead, in a shape 27 in which the weld beads are curves disposed in parallel, a bead shape of a welded part surface in which the bead width W of the facing part 20 and the distance D3b between the bead centers have a relationship of D3b/W≥2 is formed. In any shape, as shown in Fig. 3C, a welded structure in which the surface width 21 of the weld bead is 0.4 mm or more and the weld width 22 at the interface shown in Fig. 3C has a size of 0.1 mm or more is provided.

The laser specifications, the welding conditions, the processing atmosphere, the depth of the welded part, and the direction of the bead are the same as those in the method described above.

When the weld beads that are lines or curves disposed in parallel in this example have the above shape features, the concentration of tensile stress during welding is relaxed. Therefore, it is possible to avoid the concentration of tensile stress that causes cracks by inhibiting stress relaxation in a high temperature range during the second half of processing of adjacent or facing beads, which is a cause of the occurrence of weld cracks in a phosphor bronze member, and to form a welded structure having no cracks and excellent strength reliability.

### Example 4, not covered by the present invention

A structure in which the weld bead has a circular or elliptical shape will be shown with reference to Fig. 4. As shown in Fig. 4A, in a shape 28 in which the weld bead is circular, a bead shape of a welded part surface in which the bead width W and the diameter D4a of the circle between the bead centers have a relationship of D4a/W≥2 is formed.

Alternatively, as shown in Fig. 4B, in a shape in which the shape of the weld bead is an ellipse 29, a bead shape of a welded part surface in which the bead width W and the diameter D4b between the bead centers on the short side of the ellipse have a relationship of D4b/W≥2 is formed. In any shape, as shown in Fig. 4C, a welded structure in which the surface width 21 of the weld bead is 0.4 mm or more and the weld width 22 at the interface shown in Fig. 4C has a size of 0.1 mm or more is provided.

The laser specifications, the welding conditions, the processing atmosphere, the depth of the welded part, and the direction of the bead are the same as those in the method described above.

When the circular or elliptical weld bead in this example has the above shape features, the concentration of tensile stress during welding is relaxed. Therefore, it is possible to avoid the concentration of tensile stress that causes cracks by inhibiting stress relaxation in a high temperature range during the second half of processing of adjacent or facing beads, which is a cause of the occurrence of weld cracks in a phosphor bronze member, and to form a welded structure having no cracks and excellent strength reliability.

### Example 5, not covered by the present invention

A welded structure in which the weld bead has a rectangular shape will be shown with reference to Fig. 5. As shown in Fig. 5A, in a shape 30 in which the weld bead is rectangular, a bead shape of a welded part surface in which the bead width W of the facing part and the distance D5a between the bead centers have a relationship of D5a/W≥2 is formed. Alternatively, as shown in Fig. 5A, a bead shape in which the welded area having a distance of D5a is curved rather than a line is formed.

Alternatively, as shown in Fig. 5B, in a rectangular shape 31 in which the facing parts are not parallel but are trapezoidal, a bead shape of a welded part surface in which the bead width W of the facing part and the distance D5b between the bead centers have a relationship of D5b/W≥2 is formed.

In any shape, as shown in Fig. 5C, a welded structure in which the surface width 21 of the weld bead is 0.4 mm or more, and the weld width 22 at the interface shown in Fig. 5C has a size of 0.1 mm or more is provided. The laser specifications, the welding conditions, the processing atmosphere, the depth of the welded part, and the direction of the bead are the same as those in the method above.

When the rectangular weld bead in this example has the above shape features, the concentration of tensile stress during welding is relaxed. Therefore, it is possible to avoid the concentration of tensile stress that causes cracks by inhibiting stress relaxation in a high temperature range during the second half of processing of adjacent or facing beads, which is a cause of the occurrence of weld cracks in a phosphor bronze member, and to form a welded structure having no cracks and excellent strength reliability.

### Example 6, not covered by the present invention

A welded structure in which the shape of the weld bead is not continuous but has a spot shape will be shown with reference to Fig. 6. Fig. 6A is a view of a weld bead 35 formed in the shape of two spots according to the present invention from above, which is the side of the voltage detection line. As shown in Fig. 6A, a weld bead shape in which W of the adjacent weld beads 35 and the distance D6 between the spot centers have a relationship of D6/W≥2 is formed. The number of spots of the spot welded part is not limited to two, and may be three or more as long as the above relationship is satisfied.

The form of the weld bead, point shapes are described as weld spots, and the width D6 between the two centers of the welded parts is the distance between the spot centers in this example, but it is also conceivable to use the distance between the ends on one side in the direction in which the spots are connected. When there is a little variation in the size of the weld spots, measurement is easy.

In this case, as the form of a laser to be emitted, either a pulse laser or a continuous beam can be used, and the spot diameter of the laser beam is 0.04 to 0.6 mm. In addition, in the case of a continuous beam, a spot-like welding beam shape can be formed by scanning a micro beam according to beam oscillation. In addition, the processing atmosphere such as an assist gas is the same as described above.

In addition, in order to obtain a sufficient conducting area and strength reliability, as shown in Fig. 6B, a welded structure in which the surface width 21 of the welded part is 0.4 mm or more, and the weld width 22 at the interface shown in Fig. 6B has a size of 0.1 mm or more is provided.

When a weld bead shape having the above relationship according to the present invention is formed, even in the case of a spot welded structure, it is possible to avoid the concentration of tensile stress that causes cracks by inhibiting stress relaxation in a high temperature range during the second half of processing of adjacent or facing beads, which is a cause of the occurrence of weld cracks in a phosphor bronze member, and to form a welded structure having no cracks and excellent strength reliability.

### Example 7, not covered by the present invention

A welded structure having an integrated shape in which the welding target part of the bus bar negative electrode side is not made of a copper-based material shown in Example 1, but is made of the same aluminum material as the positive electrode side of the same bus bar will be shown with reference to Fig. 7. Fig. 7A is a diagram showing a weld bead formed by the present invention on a welding target part 34 provided in a shape protruding from an integrated bus bar 33 made of an aluminum-based material from above, which is the side of the voltage detection line, and Fig. 7B is a cross-sectional view of the welded part. When the material of the welding target part 34 with respect to the voltage detection terminal 14 is an aluminum type, the welded part is highly susceptible to cracking due to embrittlement of copper and aluminum compounds in addition to susceptibility to cracking due to embrittlement of a phosphor bronze member at a high temperature.

In this case, as shown in Fig. 7A, as in Example 1, regarding the shape of the weld bead, in a shape of a weld bead 35 having a U-shape with bent parts and having facing bead parts, a bead shape of a welded part surface in which the bead width W of the facing part 20 and the distance D7 between the bead centers have a relationship of D7/W≥2 is formed.

Here, the weld bead shape includes not only the shape of the weld bead 35 but also includes the shapes described above. In any bead shape, as shown in Fig. 7B, a welded structure in which the surface width 21 of the weld bead is 0.4 mm or more and the weld width 22 at the interface shown in Fig. 7B has a size of 0.1 mm or more is provided.

Laser specifications and specifications for welding conditions are the same as those described above. In addition, as shown in Fig. 7B, when the penetration on the side of the bus bar is controlled so that a melting depth 36 of the welding target part 34 made of an aluminum material on the side of the bus bar is 0.1 mm or more and the upper limit is 1.5 times or less a plate thickness T of the voltage detection terminal 14 regardless of the thickness of the bus bar plate, it is possible to reduce promotion of cracking due to an embrittled compound.

In this manner, when the shape and penetration of the weld bead are controlled, it is possible to form a welded structure having excellent strength reliability in which the occurrence of weld cracks caused by a phosphor bronze material is prevented and the promotion of cracks due to a compound with an aluminum-based bus bar is reduced.

### Example 8, not covered by the present invention

Here, the position of a weld processing part with respect to a bus bar is changed will be shown with reference to Fig. 8. In Fig. 8A, a welding target part 37 with respect to a voltage detection terminal of a bus bar is provided as a flat part at the outer end of the bus bar negative electrode side 10b in the cell adjacent direction, a voltage detection terminal 38 having a shape that matches the shape of the flat part is disposed in an overlapping manner, and regarding the shape of the weld bead, in a shape 39 in which the weld bead has a U-shape with bent parts and has facing bead parts, a bead shape of a welded part surface in which the bead width W of the facing part 20 and the distance D8 between the bead centers have a relationship of D8/W≥2 is formed.

Here, the weld bead shape includes not only the shape 39 but also includes the shapes of the materials described in Examples 1 to 7. In any shape, as shown in Fig. 8B, a welded structure in which the surface width 21 of the weld bead is 0.4 mm or more and the weld width 22 at the interface shown in Fig. 8B has a size of 0.1 mm or more is provided.

The laser specifications, the welding conditions, the processing atmosphere, the depth of the welded part, the direction of the bead, and the spot shape are the same as those in the method described above. This welded structure creates a space in the area between the bus bar of the battery pack and the line bundle terminal of the voltage detection line, and a mounting structure for a higher density battery pack with a smaller size can be realized.

### Example 9, not covered by the present invention

Here also, the position of the weld processing part with respect to the bus bar negative electrode side 10b is changed will be shown with reference to Fig. 9. This discloses a second configuration indicating a change in the position of the joint part. In Fig. 9A, no protruding flat part is provided on the bus bar negative electrode side 10b, a voltage detection terminal 40 having a predetermined shape is disposed in an overlapping manner near the outer diameter end of the processing part to be connected to the terminal of the cell 2 of the bus bar negative electrode side 10b, and in a shape 41 in which the weld bead has a U-shape with bent parts and has facing bead parts, which is the shape of the weld bead of the present invention, a bead shape of a welded part surface in which the bead width W of the facing part 20 and the distance D9 between the bead centers have a relationship of D9/W≥2 is formed.

As shown in Fig. 9B, a welded structure in which the surface width 21 of the weld bead is 0.4 mm or more and the weld width 22 at the interface shown in Fig. 9B has a size of 0.1 mm or more is provided. Here, the weld bead shape includes not only the shape 41 but also the shapes of the materials described in Examples 1 to 7.

The laser specifications, the welding conditions, the processing atmosphere, the depth of the welded part, the direction of the bead, and the spot shape are the same as those in the method described above. This welded structure creates a space in the area between the bus bars 8 and 10 of the battery pack 1 and the line bundle terminal of the voltage detection line 11 and at the same time, the bus bar 10 can be made smaller, and a mounting structure for a higher density battery pack 1 with a smaller size can be realized.

### Example 10

Here again, the shape of the weld processing part with respect to the bus bar is changed will be shown with reference to Fig. 10. Fig. 10A is a top view of the disposition in which a welding target part 42 with respect to the voltage detection terminal of the bus bar is provided to protrude from the outer diameter end on the side of an adjacent cell and is also bent upward, and on the other hand, a voltage detection terminal 43 is bent into a U-shape or a rectangular shape, and the two parts are temporarily fixed by fitting them or inserting them together with the voltage detection terminal 43 on the outside. In addition, Fig. 10B is a cross-sectional view of a fitting part between the welding target part 42 of the bus bar and the voltage detection terminal 43.

The laser beam 17 is emitted to a surface 44 on the right side of the fitting part in Fig. 10B from diagonally above, and lap welding is performed in the lateral direction. In addition, Fig. 10C is a view of the fitting part between the welding target part 42 and the voltage detection terminal 43 and the welded part surface when viewed from the short side surface near the center of the bus bar negative electrode side 10b. In a weld bead 45 having a U-shape with bent parts and having facing bead parts, a bead shape of a welded part surface in which the bead width W of the facing part and the distance D10a between the bead centers have a relationship of D10a/W≥2 is formed.

In addition, as shown in Fig. 10D, a welded structure in which the surface width 21 of the weld bead 45 is 0.4 mm or more and the weld width 22 at the interface shown in Fig. 10D has a size of 0.1 mm or more is provided. Here, the weld bead shape includes not only the shape of the weld bead 45 but also includes the shapes of the materials described in above.

The laser specifications, the welding conditions, the processing atmosphere, the depth of the welded part, the direction of the bead, and the spot shape are the same as those in the method described above.

In addition, in this shape, since the strength effects of fitting and fixing are also obtained, as shown in Fig. 10E, strength reliability is excellent even without a bent weld bead shape and facing part, even if a weld bead 46 of a welded part surface in which the distance D10b between the bead centers is set as the bead length, and the bead width W and the bead length D10b have a relationship of D10b/W≥2, which is the bead shape of the present invention, is formed, excellent strength is obtained, and thus it is possible to make the processing target part smaller and to form a welded structure having excellent strength reliability. The weld bead 46 is not limited to being formed on the side surface of the bent part shown in Fig. 10E, and can be formed on the fitting upper surface.

### Example 11

The vertical positional relationship between the bus bar negative electrode side 10b and the voltage detection terminal 14 is changed will be shown with reference to Fig. 11. Fig. 11 shows processing in which the bus bar 10 is disposed so that a rear surface 47, defined above in the front and rear surfaces serving as the top and bottom of the bus bar when attached to the battery pack 1, is on the upper side during weld processing, the voltage detection terminal 14 is disposed thereabove, the laser beam 17 is emitted to the surface of the voltage detection terminal, and welding is performed. Fig. 11A is a side view of the bus bar on the short side, and Fig. 11B is a side view of the bus bar on the long side.

Fig. 11C is a top view of the side to which a laser is emitted. As shown in Fig. 11C, regarding the shape of the weld bead, in a shape 48 in which the weld bead has a U-shape with bent parts and has facing bead parts, which is the shape of the weld bead of the present invention, a bead shape of a welded part surface in which the bead width W of the facing part 20 and the distance D11 between the bead centers have a relationship of D11/W≥2 is formed. In addition, as shown in Fig. 11D, a welded structure in which the surface width 21 of the weld bead is 0.4 mm or more, and the weld width 22 at the interface shown in Fig. 11D has a size of 0.1 mm or more is provided.

Here, the weld joint structure or weld bead shape includes not only the shape 48 but also includes the joint structures or weld shapes of the materials described above.

The laser specifications, the welding conditions, the processing atmosphere, the depth of the welded part, the direction of the bead, and the spot shape are the same as those in the method described above. Fig. 11E shows a structure in which the bus bar negative electrode side 10b and the voltage detection terminal 14 welded by the above method are mounted as the battery pack 1. A structure in which the voltage detection terminal 14 is welded to the lower side of the bus bar negative electrode side 10b and the welding target part 16 when mounted as the battery pack 1 is formed. Here, Fig. 11E shows the welding target part 16 of the bus bar negative electrode side 10b protruding to the outside of the cell 2, and this is a diagram for illustrating Example 11, and in an actual product, the welding target part 16 and the voltage detection terminal 14 face toward the inside of the cell 2 as shown in Fig. 13 and Fig. 14.

When the welded structure shown is formed, if the rear side surface of the bus bar 10 is flatter than the other surface, it is possible to obtain a welded structure having excellent adhesion to the voltage detection terminal and excellent welding quality. In addition, for assembling components in actual machine processing, not only a processing method in which the bus bar 10 is disposed alone and welded to the voltage detection terminal but also a processing method in which a shape in which the height of the resin part on the rear side of a case does not interfere with the jig even when the bus bar is attached to the resin bus bar case for mounting the voltage detection line bundle and the bus bar on the top of the battery pack is formed, and the weak effect of minimizing thermal impact on the resin part during laser welding is obtained can be used.

### [Reference Signs List]

- 1: Battery pack
- 2: Cell
- 2a: Positive electrode
- 2b: Negative electrode
- 3: Holder
- 4: End plate
- 4a: Opening
- 5: Side plate
- 5b: Opening
- 6: Bolt
- 7: Insulating cover
- 8: End bus bar
- 10: Bus bar
- 11: Voltage detection line
- 14: Voltage detection terminal
- 15: Bus bar surface
- 16: Welding target part
- 17: Laser
- 19, 20: Weld bead
- 21: Surface width of weld bead
- 22: Width of weld bead on side of bus bar
- 23: Melting depth
- 25-32, 33: Bus bar
- 34: Welding target part
- 35: Weld bead
- 36: Melting depth
- 37: Welding target part
- 38: Voltage detection terminal
- 39: Weld bead
- 40: Voltage detection terminal
- 41: Weld bead
- 42: Welding target part
- 43: U-shaped voltage detection terminal
- 44: Surface of U-shaped voltage detection terminal
- 45: Weld bead
- 46: Weld bead
- 47: Rear surface of bus bar
- 48: Weld bead
- 49: U-shaped weld bead
- 100: Harness assembly
- 101: Wiring group
- 102: Socket
- 110: Branch harness

## Claims

1. A metal welded structure which is a welded structure including a first metal member (16), a second metal member (14) having a part overlapping with the first metal member (16), and a welded part (25) formed in the overlapping part,
wherein the welded part (25) has a molten part formed by melting through the second metal member (14) in a thickness direction to the inside of the first metal member (16),
**characterized in that**,
when viewed in the overlapping direction, the welded part (25) has two L-shapes arranged approximately in mirror symmetry, and
the width D2 between two facing parts (20) of the two L-shapes at the two most distant end points of the welded part (25) and the bead width W of the welded part (25) have a relationship of D2/W≥2.

2. The metal welded structure according to claim 1, wherein the welded part (25) is welded by any one of a laser, arc, and electron beam.

3. The metal welded structure according to claim 1, wherein the molten metal is phosphor bronze or bronze.

4. A battery pack (1) in which a first cell (2) having a first terminal and a second cell (2) having a second terminal are arranged in a first direction, the battery pack (1) comprising:
a bus bar (10) that connects the first terminal and the second terminal in the first direction; and
a voltage detection terminal (14, 38, 40, 43) for measuring a voltage of the bus bar (10),
**characterized in that**,
with the bus bar (10) being a first metal member (16) and the voltage detection terminal (14, 38, 40, 43) being a second metal member (14), the first metal member (16) and the second metal member (14) are welded together so as to form the metal welded structure according to claim 1.

5. A method of producing a battery pack (1) in which a first cell (2) having a first terminal and a second cell (2) having a second terminal are arranged in a first direction, the battery pack (1) including: a bus bar (10) that connects the first terminal and the second terminal in the first direction; and a voltage detection terminal (14, 38, 40, 43) for measuring a voltage of the bus bar (10), the method being **characterized by**:
with the bus bar (10) being a first metal member (16) and the voltage detection terminal (14, 38, 40, 43) being a second metal member (14), welding the first metal member (16) and the second metal member (14) so that the first metal member (16) and the second metal member (14) form the metal welded structure according to claim 1.

## Patentansprüche

1. Metallschweißstruktur, die eine Schweißstruktur ist, die ein erstes Metallelement (16), ein zweites Metallelement (14) mit einem mit dem ersten Metallelement (16) überlappenden Teil und einen in dem überlappenden Teil gebildeten Schweißteil (25) umfasst,
wobei der Schweißteil (25) einen geschmolzenen Teil aufweist, der durch Schmelzen durch das zweite Metallelement (14) in einer Dickenrichtung bis zum Inneren des ersten Metallelements (16) gebildet wird,
**dadurch gekennzeichnet, dass**
bei Betrachtung in der Überlappungsrichtung der Schweißteil (25) zwei L-Formen aufweist, die annähernd in Spiegelsymmetrie angeordnet sind, und
die Breite D2 zwischen zwei gegenüberliegenden Teilen (20) der zwei L-Formen an den zwei am weitesten entfernten Endpunkten des Schweißteils (25) und die Raupenbreite W des Schweißteils (25) eine Beziehung von D2/W≥2 aufweisen.

2. Metallschweißstruktur nach Anspruch 1, wobei der Schweißteil (25) durch Laser, Lichtbogen oder Elektronenstrahl geschweißt ist.

3. Metallschweißstruktur nach Anspruch 1, wobei das geschmolzene Metall Phosphorbronze oder Bronze ist.

4. Batteriepack (1), in dem eine erste Zelle (2) mit einem ersten Anschluss und eine zweite Zelle (2) mit einem zweiten Anschluss in einer ersten Richtung angeordnet sind, wobei das Batteriepack (1) umfasst:
eine Sammelschiene (10), die den ersten Anschluss und den zweiten Anschluss in der ersten Richtung verbindet; und
einen Spannungsdetektionsanschluss (14, 38, 40, 43) zum Messen einer Spannung der Sammelschiene (10),
**dadurch gekennzeichnet, dass** mit der Sammelschiene (10) als erstem Metallelement (16) und dem Spannungsdetektionsanschluss (14, 38, 40, 43) als zweitem Metallelement (14) das erste Metallelement (16) und das zweite Metallelement (14) zusammengeschweißt sind, um die Metallschweißstruktur nach Anspruch 1 zu bilden.

5. Verfahren zum Herstellen eines Batteriepacks (1), in dem eine erste Zelle (2) mit einem ersten Anschluss und eine zweite Zelle (2) mit einem zweiten Anschluss in einer ersten Richtung angeordnet sind, wobei der Batteriepack (1) umfasst: eine Sammelschiene (10), die den ersten Anschluss und den zweiten Anschluss in der ersten Richtung verbindet; und einen Spannungsdetektionsanschluss (14, 38, 40, 43) zum Messen einer Spannung der Sammelschiene (10), wobei das Verfahren **dadurch gekennzeichnet ist, dass**
mit der Sammelschiene (10) als erstem Metallelement (16) und dem Spannungsdetektionsanschluss (14, 38, 40, 43) als zweitem Metallelement (14) das erste Metallelement (16) und das zweite Metallelement (14) verschweißt werden, so dass das erste Metallelement (16) und das zweite Metallelement (14) die Metallschweißstruktur nach Anspruch 1 bilden.

## Revendications

1. Structure métallique soudée qui est une structure soudée incluant un premier élément métallique (16), un deuxième élément métallique (14) ayant une partie se chevauchant avec le premier élément métallique (16), et une partie soudée (25) formée dans la partie en chevauchement,
dans lequel la partie soudée (25) a une partie fondue formée par fusion à travers le deuxième élément métallique (14) dans un sens de l'épaisseur jusqu'à l'intérieur du premier élément métallique (16),
**caractérisé en ce que**,
lorsqu'elle est vue dans le sens de chevauchement, la partie soudée (25) a deux formes en L agencées approximativement en symétrie miroir, et
la largeur D2 entre deux parties (20) se faisant face des deux formes en L aux deux points d'extrémité les plus distants de la partie soudée (25) et la largeur W de cordon de la partie soudée (25) ont une relation de D2/W ≥ 2.

2. Structure métallique soudée selon la revendication 1, dans lequel la partie soudée (25) est soudée par l'un quelconque parmi un faisceau laser, d'arc, et d'électrons.

3. Structure métallique soudée selon la revendication 1, dans lequel le métal fondu est un bronze phosphoreux ou un bronze.

4. Bloc-batterie (1) dans lequel un premier élément (2) ayant une première borne et un deuxième élément (2) ayant une deuxième borne sont agencés dans un premier sens, le bloc-batterie (1) comprenant :
une barre omnibus (10) qui connecte la première borne et la deuxième borne dans le premier sens ; et
une borne (14, 38, 40, 43) de détection de tension pour mesurer une tension de la barre omnibus (10),
**caractérisé en ce que**,
avec la barre omnibus (10) étant un premier élément métallique (16) et la borne (14, 38, 40, 43) de détection de tension étant un deuxième élément métallique (14), le premier élément métallique (16) et le deuxième élément métallique (14) sont soudés ensemble de façon à former la structure métallique soudée selon la revendication 1.

5. Procédé de production d'un bloc-batterie (1) dans lequel un premier élément (2) ayant une première borne et un deuxième élément (2) ayant une deuxième borne sont agencés dans un premier sens, le bloc-batterie (1) incluant : une barre omnibus (10) qui connecte la première borne et la deuxième borne dans le premier sens ; et une borne (14, 38, 40, 43) de détection de tension pour mesurer une tension de la barre omnibus (10),
le procédé étant **caractérisé par** :
avec la barre omnibus (10) étant un premier élément métallique (16) et la borne (14, 38, 40, 43) de détection de tension étant un deuxième élément métallique (14), le soudage du premier élément métallique (16) et du deuxième élément métallique (14) de façon à ce que le premier élément métallique (16) et le deuxième élément métallique (14) forment la structure métallique soudée selon la revendication 1.
